# EUROPÄISCHE PATENTSCHRIFT

(11) **EP 3 392 725 B1**
(45) Veröffentlichungstag und Bekanntmachung des Hinweises auf die Patenterteilung: **19.10.2022**
(21) Anmeldenummer: 17167562.2
(22) Anmeldetag: 21.04.2017
(51) Int. Cl.: G06K 9/62, G06N 20/00, G05B 19/05, G05B 19/042, G05B 17/02

(54) **VORSCHLAGEN UND/ODER ERSTELLEN VON AGENTEN IN EINEM INDUSTRIELLEN AUTOMATISIERUNGSSYSTEM**
SUGGESTION AND OR CREATION OF AGENTS IN AN INDUSTRIAL AUTOMATION SYSTEM
PROPOSITION ET/OU FABRICATION D'AGENTS DANS UN SYSTÈME D'AUTOMATISATION INDUSTRIELLE

(43) Veröffentlichungstag der Anmeldung: 24.10.2018
(73) Patentinhaber: Siemens Aktiengesellschaft, 80333 München (DE)
(72) Erfinder: Lamparter, Steffen, 85622 Feldkirchen (DE); Thon, Ingo, 81541 Muenchen (DE)

(56) Entgegenhaltungen:
- EP-A1- 3 001 266
- EP-A1- 3 070 554
- EP-A1- 3 156 941
- DE-A1-102010 043 651
- DE-A1-102014 208 034
- US-A1- 2014 039 834
- US-A1- 2014 047 107

## Beschreibung

Die Erfindung betrifft ein Verfahren zum Vorschlagen und/oder Erstellen zumindest eines Agenten in einem industriellen Automatisierungssystem. Des Weiteren betrifft die Erfindung eine Vorrichtung zur Durchführung eines derartigen Verfahrens, ein Automatisierungssystem mit einer derartigen Vorrichtung sowie ein Automatisierungsgerät aufweisend ein Framework, das zur Ausführung eines Agenten ausgebildet ist.

Agenten sind dabei als Programme zu verstehen, die einen begrenzten technischen Aufgabenbereich in einem Automatisierungssystem übernehmen. Sie können als eine (Software-)Einheit ausgebildet sein, autonomes Verhalten zur Erreichung des definierten Ziels sicherzustellen, zur Interaktion mit der Umgebung und/oder mit anderen Agenten ausgebildet sein und zur dauerhaften Beibehaltung eines inneren Zustandes fähig sein. Derartige Agenten sind z.B. Gegenstand der Richtlinienreihe VDI/VDE 2653 und des Fachausschusses 5.15: Agentensysteme des VDI/VDE.

Ein Agent kann bspw. in einem Pumpensystem die Bildung von unerwünschter Kavitation anhand der ihm zur Verfügung stehenden Daten von verschiedenen Sensoren (z.B.: Durchflussmenge und/oder -geschwindigkeit, Druck, Temperatur, etc.) überwachen und ggf. Maßnahmen ergreifen und/oder eine entsprechende Alarmierung durchführen. Agenten können auch als sog. Apps ausgebildet sein, die auf einem eigens dafür eingerichteten Framework auf den Automatisierungsgeräten laufen und auf einer zentralen App-Verwaltung (z.B. App-Store) verteilt werden.

Das Erstellen von Agenten ist bisher ein sehr kosten- und arbeitsintensiver Prozess. Die existierenden Prozesse dazu benötigen einen großen Teil an menschlicher Interaktion, vor allem für die Schritte des Datensammelns, des Agenten Programmierens und für das Deployment des tatsächlichen Agenten. Aus US 2016/0054720 A1 ist eine intelligente programmierbare Steuerung (programmable logic controller, kurz PLC) bekannt, wobei die intelligente PLC selbst Daten-Analysen und eine Kontextualisierung von Daten durchführt.

Aus WO 2017/027012 A1 ist ein Verfahren zum Betreiben einer intelligenten programmierbaren Steuerung (PLC) in einem Automatisierungssystem eines Produktionsprozesses bekannt, wobei die intelligente PLC Systemdaten des Automatisierungssystems sowie ein semantisches Kontextmodell empfängt und wobei das Kontextmodell eine Vielzahl von Ontologien enthält, die formale Spezifikationen von konzeptuellen Einheiten enthalten, die mit dem Automatisierungssystem assoziiert sind.

DE102010043651 A1 betrifft ein Anlagenüberwachungssystem mit einer Anlagenmodellierungseinrichtung welche dazu ausgelegt sind Systemüberwachungsdaten zu bestimmen.

EP3156941 A1 und US 2014/039834 A1 beschreiben ein Verfahren zur Datenanalyse, um ungewöhnliche Sensor-Messwerte zu erkennen.

Es ist Aufgabe der vorliegenden Erfindung, ein Verfahren für moderne Automatisierungssysteme vorzuschlagen, das es ermöglicht, die eingangs genannten Agenten einfacher und effizienter vorzuschlagen und/oder zu erstellen. Weiterhin ist es Aufgabe der Erfindung eine Vorrichtung zur Durchführung des Verfahrens sowie ein Automatisierungssystem mit einer Vorrichtung anzugeben.

Dazu wird ein Verfahren gemäß Patentanspruch 1 zum Vorschlagen und/oder Erstellen zumindest eines Agenten in einem industriellen Automatisierungssystem vorgeschlagen, wobei das industrielle Automatisierungssystem aufweist:
- Automatisierungsgeräte, die zumindest teilweise eine Datenquelle aufweisen, wobei die Datenquellen Daten der Automatisierungsgeräte sammeln, weiterleiten und/oder verarbeiten und
- eine Datensenke, in der Daten, insbesondere Zustandsdaten, der Datenquellen gespeichert werden.

Eine Agenten-Vorschlagskomponente verarbeitet die Daten der Datensenke mittels einer Clusteranalyse zu Clustern und stellt die Cluster derart an einer Schnittstelle zur Verfügung, dass mittels einer Agenten-Generierungskomponente anhand zumindest einer Auswahl der Cluster ein Modell für den Agenten erstellbar ist.

Unter Clusteranalysen sind Verfahren zur Entdeckung von Ähnlichkeitsstrukturen in großen Datenbeständen zu verstehen. Dazu zählen beispielsweise Methoden des überwachten beziehungsweise unüberwachten maschinellen Lernens, wie k-means oder DBSCAN. Das Ergebnis der Clusteranalyse sind Cluster. Der Vorteil ist hier, dass die Analyse der Daten vollautomatisiert durchgeführt werden kann. Überwachtes Lernen würde sich anbieten, wenn bereits Daten in kontextualisierter Form vorliegen. Algorithmen des unüberwachten Lernens ermöglichen es, auch Ähnlichkeitsstrukturen in Daten zu finden, die noch nicht kontextualisiert sind. Die gefundenen Cluster können hier von einem Experten auf dem Gebiet des Automatisierungssystems analysiert und komfortabel Agenten aus den gefundenen Clustern generiert werden.

Cluster sind dabei Gruppen von ähnlichen Datenpunkten oder Datengruppen, die durch eine Clusteranalyse gebildet werden.

Daten im Sinne der Erfindung sind dabei beliebige Daten und/oder Zustandsdaten die im Automatisierungssystem anfallen. Hier sind jegliche Messwerte physikalischer oder virtueller Größen, Zählwerte von diskreten Vorgängen, wie beispielsweise produzierte Stückzahlen oder Fehler im System, etc. denkbar. Die Daten liegen dabei idealerweise in einem kontextualisierten Format vor. Das erfindungsgemäße Verfahren eignet sich aber ebenso sehr vorteilhaft für nicht-kontextualisierte Daten. Daten können beispielsweise in Formaten wie dem JSON, XML oder proprietären industriellen Formaten vorliegen. Eine Komprimierung der Daten bereits in der Datenquelle ist ebenso denkbar.

Der Kontext von Daten, oft auch als Semantik oder Meta-Daten bezeichnet, die als Kontextdaten vorliegen können, enthalten die für die Auswertung verwertbaren Informationen über den Kontext der Daten aus den Datenquellen. Es kann sich hier in einfachen Fällen um die Einheit einer Messgröße handeln, es kann sich aber auch um komplexere Informationen handeln, wie die Art eines Sensors/Aktors, den Einheiten der gemessenen Größen, die Einbauposition des Sensors/Aktors, die Umwelt des Sensors/Aktors oder weitere Informationen die in einem industriellen Umfeld von Bedeutung sein könnten. Die Daten werden mit Kontextdaten kontextualisiert.

Datenquellen sind dabei Vorrichtungen oder Komponenten, die Daten, insbesondere Zustandsdaten der Automatisierungsgeräte sammeln und oder aufbereiten. Dabei ist denkbar, dass einzelne Automatisierungsgeräte keine Datenquelle aufweisen, deren Daten aber von einer Datenquelle eines anderen, z.B. übergeordneten Automatisierungsgeräts gesammelt/aufbereitet werden. Es kann sich dabei um spezielle Kommunikationsstacks handeln, die Daten bereits in sinnvollen Formaten aufbereiten und diese entsprechend Weiterleiten. Auch die CPUs der Automatisierungsgeräte können als Datenquelle ausgebildet sein oder eine solche enthalten. Datenquellen können in bestehenden Automatisierungssystemen auch nachgerüstet werden, oder die bestehenden Datenstrukturen in teil-zentrale Datenquellen umgeleitet werden. Dazu gibt es immer vielfältigere Produkte, insbesondere aus dem Gebiet des "Industry of Things".

Automatisierungsgeräte sind alle Geräte, die in einem Automatisierungssystem prinzipiell Daten liefern können. Zu den Automatisierungsgeräten zählen insbesondere Feldgeräte, Sensoren, Aktoren, Steuerungen, aber auch z.B. rein mechanische Aktoren (z.B. Ventile), die nachträglich mit einer Sensorik und einer Datenschnittstelle ausgestattet wurden. Die Daten können also auch einfachste Statusinformationen wie Boolsche Operatoren sein, z.B. ein Ventil, das nur zwei Stellungen hat - offen und geschlossen. Die Kontextinformationen wären hierbei die Tatsache, dass es sich ein Ventil handelt und welche der beiden Zustände den gesperrten Zustand darstellt.

Eine Datensenke zur Speicherung von Daten aus dem Automatisierungssystem kann beispielsweise ein lokaler oder dezentral angeordneter Server oder eine Serverfarm oder Cloudspeicher sein. Die Datensenke muss nicht am selben Ort wie die Automatisierungsgeräte und/oder die Datenquellen angeordnet sein, sondern kann insbesondere auch in einem entfernten Rechenzentrum angeordnet sein. Die Daten müssen dabei nicht in Echtzeit aus dem Automatisierungssystem gespeichert werden, sondern können auch in Batch-Jobs in gewissen Intervallen abgelegt werden.

Die Datensenke kann die Daten über einen vorgebbaren Zeitraum archivieren. Dabei ist denkbar, dass die Datensenke die Daten nur so lange vorhält, bis eine Clusteranalyse durchgeführt wurde. Wenn also eine aktuelle Clusteranalyse durchgeführt wurde ist denkbar, dass die Daten von der Datensenke des Automatisierungssystems gelöscht werden um Speicherplatz zu schaffen. Es ist aber ebenso denkbar dass die Datensenke nur als Zwischenspeicher für ein übergeordnetes Speichersystem dient. Es müssen nicht alle Daten in der Datensenke Analysiert werden, es kann sich als hilfreich erweisen nur bestimmte Daten auszuwählen, z.B. auf Basis der Aufgaben des gewünschten Agenten. Hier könnte beispielsweise ein digitales Lastenheft für den zu erstellenden Agenten mit einbezogen werden.

In einfachen Fällen kann direkt durch die Auswahl, z.B. eines Teils der Cluster, eine mathematische Beziehung anhand der Schranken in denen sich die Werte des Clusters befinden, erkannt werden, woraus ein mathematisches Modell generiert werden kann. Hierbei sind beispielsweise Schranken denkbar, deren Über- oder Unterschreitung einen entsprechenden Zustand des Systems/der Komponente andeuten, um dann in Folge durch den Agent ein Alarmsignal auszulösen. Die Auswahl der Cluster ist dabei der Schritt, mit dem festgelegt wird, welche Informationen für die Erstellung des Agenten verwendet werden sollen. Dieser Schritt kann sowohl automatisiert als auch manuell oder teilautomatisiert unter Hilfestellung durch das System bzw. die Schnittstelle durchgeführt werden.

In einer Ausführungsform kann die Auswahl manuell erstellt werden. Dazu kann die Schnittstelle als ein HMI ausgebildet sein. Ein HMI im Sinne der Erfindung ist jegliches Gerät, das eine Interaktion eines menschlichen Bedieners mit der Schnittstelle ermöglicht. Hierbei sind jegliche Endgeräte wie PCs, Laptops, Smartphones, Tablets aber auch industrielle HMIs im klassischen Sinne denkbar. Hier wird dem Experten auf dem technischen Gebiet, auf dem sich das Automatisierungssystem befindet, die durch die Clusteranalyse gefundenen Strukturen präsentiert und der Experte kann sich mit seinem Domäne-Wissen komfortabel die Cluster auswählen, deren Informationen einen Mehrwert bieten. Als weiter Funktionalität des Agenten können dann entsprechende Maßnahmen, Alarme oder Nachrichten mit dem Modell, das die Auswahl abbildet, verknüpft werden.

In einer weiteren Ausführungsform wird die Auswahl automatisiert oder zumindest teilautomatisiert erstellt. Existieren bereits Erfahrungswerte aus vergleichbaren Automatisierungssystemen, so ist es denkbar, dass die Menge der erstellten Cluster mit den Erfahrungswerten abgeglichen werden. Auf diese Weise kann die Interaktion durch den Domäne-Experten noch weiter verringert werden. Hierbei ist es denkbar, dass der Domäne-Experte nur noch als Qualitätssicherungsstufe agiert.

In einer vorteilhaften Ausführungsform wird das Modell für den Agenten mittels eines Algorithmus des überwachten Lernens erstellt. Unter Algorithmen des überwachten Lernens sind Algorithmen des überwachten maschinellen Lernens (engl.: supervised machine learning) zu verstehen, die dem Agenten die Fähigkeit ermöglichen, die in den Clustern angedeuteten Gesetzmäßigkeiten abzubilden. Hier bieten sich vor allem Methoden wie z.B. Support Vector Machine Training (auch SVM Training) oder logistische Regression an. Sind aus den Schranken, die die Cluster begrenzen, nicht direkt die Modellparameter erstellbar, so ist es vorteilhaft, die Daten des ausgewählten Clusters bzw. die Daten der Auswahl mittels eines Algorithmus des überwachten Lernens zu analysieren. In diesem Fall lässt sich ein entsprechendes Modell erstellen, das die Auswahl der Cluster abbildet. Auf diese Weise können auch deutlich komplexere Zusammenhänge, die beispielsweise nicht lediglich zwei- oder dreidimensional dargestellt werden können, sondern n-dimensionale Zusammenhänge beinhalten, ebenfalls mittels eines Modells für einen entsprechenden Agenten abgebildet werden.

In einer weiteren Ausführungsform ist das Modell ein mathematisches und/oder ein zustandsbasiertes Modell. Dies hat den Vorteil, dass viele bestehende Systeme solche mathematischen und/oder zustandsbasierten Modelle direkt verarbeiten können. In einer weiteren Ausführungsform bereitet die Schnittstelle die Cluster zur manuellen Auswahl auf. Hierbei ist denkbar, dass ein User-Interface die gefundenen Cluster so aufbereitet, dass der Nutzer seine Auswahl direkt anhand der zu Clustern verarbeiteten Datenpunkte treffen kann und direkt im folgenden Schritt eine entsprechende Funktion für den Agenten zuweisen kann. Dies kann in einer zwei- oder dreidimensionalen Darstellung geschehen. Farbliche Hervorhebungen für die einzelnen Cluster sind ebenso denkbar.

Erfindungsgemäß werden die Cluster und oder der Agent unter Einbeziehung von KontextDaten erstellt. Dies erlaubt einen erhöhten Grad der Automatisierung, da die Cluster bereits anhand des Kontexts erstellt werden können und so gezielt Agenten erstellt werden können. Kontextdaten können dabei z.B. aus verschiedenen Engineering Lösungen erhalten werden. Denkbar sind Schnittstellen aus sog. Plant Engineering Software.

Erfindungsgemäß bearbeitet die Agentenvorschlagskomponente die Daten anhand von KontextDaten in Clustern. Die Kontext-Daten können ebenso wie die Daten auch zur Clusteranalyse herangezogen werden.

In einer weiteren vorteilhaften Ausführungsform strukturiert die Agentenvorschlagskomponente die Cluster anhand von Kontext-Daten. Hierbei werden vorteilhaft die Cluster anhand einer Clusteranalyse der Daten erstellt und in einem weiteren Schritt wird anhand der Kontext-Daten eine Strukturierung der Cluster vorgenommen. Hierbei können beispielsweise Positionsdaten der Automatisierungsgeräte, Umweltdaten, Gerätetypen oder schlichtweg Arten von physikalischen Daten, also beispielsweise nur die Durchflussgeschwindigkeiten entsprechend strukturiert werden und aufbereitet werden.

In einer weiteren vorteilhaften Ausführungsform versehen die Datenquellen die Daten mit Kontext-Daten. Für das spätere Clustern ist es besonders vorteilhaft, wenn die Datenquellen bereits ihr Wissen des Kontexts an die Daten in Form von Meta-Daten oder auch Kontext-Daten anfügen. Dies ermöglicht ein effizienteres Clustering oder sogar das Erkennen von völlig neuen Strukturen bei der Clusteranalyse.

In einer weiteren vorteilhaften Ausführungsform kommunizieren die Datenquellen mittels eines industriellen Protokolls, insbesondere mittels eines universellen industriellen Protokolls. Hierbei ist denkbar, dass ein universelles industrielles Protokoll bereits eine Komprimierung der Daten und/oder eine Vorauswahl der Daten vornimmt. Dies hat den Vorteil, dass in der Datensenke weniger Speicherplatz benötigt wird und vor allem, dass der Traffic über das Netzwerk für die eigentlichen Automatisierungsaufgaben freigehalten wird.

In einer weiteren vorteilhaften Ausführungsform sind die Datenquellen als ein universeller Kommunikationsstack ausgebildet, die mittels eines universellen industriellen Kommunikationsprotokolls kommunizieren. Unter universellen industriellen Kommunikationsprotokollen sind dabei bekannte Protokolle wie PROFINET, PROFIBUS, OPC UA oder weitere zu verstehen. Ebenso sind Kommunikationsprotokolle denkbar, die eine Kontextualisierung der Daten inkl. einer Historisierung durchführen, wie es teilweise bei OPC UA bereits der Fall ist.

Es ist ebenso denkbar, dass Daten manuell "gelabelt" werden, d.h. z.B. beim Engineering bereits mit einen Label versehen werden, in dem die Kontextdaten enthalten sind. Ein überwachtes Clustering könnte auch zu einem Labelling verwendet werden.

In einer besonders vorteilhaften Ausführungsform selektieren die Datenquellen die Daten anhand von Kontextdaten vor. Um die Menge der Daten, die an die Datensenke übertragen werden, zu reduzieren und die Qualität zu erhöhen, ist es denkbar, dass anhand der Kontext-Informationen, die in einem Automatisierungsgerät bzw. deren Datenquellen vorhanden sein können, bereits vorselektiert wird, um einen Fokus auf die richtigen Daten zu setzen. Dies vereinfacht die spätere Clusteranalyse, da irrelevante Daten nicht mit verarbeitet werden müssen. Dazu kann die Datenquelle die Kontextdaten von einem übergeordneten System beziehen. Dies kann im Vorfeld währende der Konfiguration oder auch während des laufenden Betriebs geschehen.

In einer weiteren Ausführungsform wird eine Archivierung oder eine Vorverarbeitung der Daten durch die Datenquellen für einen vorgebbaren Zeitraum durchgeführt. Dies hat den Vorteil, dass das tatsächliche Übertragen der Daten, die dann bereits in einer aufbereiteten Form vorliegen, zu Zeitpunkten geschehen kann, in denen die Produktion bzw. das industrielle Netzwerk eine geringe Last aufweisen.

Die Agentengenerierungskomponente erstellt einen Agenten und stellt ihn im Automatisierungssystem als ausführbare Binary zu Verfügung. Zusätzlich kann die Agentengenerierungskomponente den Agenten auch als kompatibles mathematisches Modell zu Verfügung stellen.

Dies kann in einem so genannten App Store geschehen. Ebenso ist denkbar, dass der Agent als ein Docking-Container mittels eines virtualisierten Betriebssystems in einem Container abgelegt wird.

Die Aufgabe wird des Weiteren durch eine Vorrichtung gemäß Patentanspruch 15 zum Vorschlagen und/oder Erstellen von Agenten in einem industriellen Automatisierungssystem gemäß dem erfindungsgemäßen Verfahren gelöst, wobei das industrielle Automatisierungssystem aufweist:
- Automatisierungsgeräte, die zumindest teilweise eine Datenquelle aufweisen, wobei die Datenquellen zum sammeln und/oder verarbeiten von Daten der Automatisierungsgeräte ausgebildet sind,
- eine Datensenke, die zum Speichern der Daten der Datenquellen ausgebildet ist.

Die Vorrichtung weist eine Agenten-Vorschlagskomponente auf, die zum Verarbeiten der Daten aus der Datensenke mittels einer Clusteranalyse zu Clustern ausgebildet ist und die Agenten-Vorschlagskomponente weist eine Schnittstelle auf und die Cluster werden derart an der Schnittstelle zur Verfügung stellt, dass mittels einer Agenten-Generierungskomponente anhand zumindest einer Auswahl der Cluster ein Modell für den Agenten erstellbar ist.

Die Vorrichtung kann dabei als eine Softwarekomponente auf einem PC oder Industrie-PC ausgebildet sein. Die Agenten Vorschlags- und Generierungskomponenten können, je nach Rechenaufwand und Datenaufkommen, auch in ein Rechenzentrum ausgelagert werden. Auch eine völlig dezentrale, verteilte Architektur ist denkbar.

Die Aufgabe wird ferner durch ein Automatisierungssystem gemäß Patentanspruch 16 gelöst, wobei das Automatisierungssystem aufweist:
- Automatisierungsgeräte, die zumindest teilweise eine Datenquelle aufweisen,
- wobei die Datenquellen zum sammeln und/oder verarbeiten von Daten der Automatisierungsgeräte ausgebildet sind,
- eine Datensenke, die zum Speichern der Daten der Datenquellen ausgebildet ist sowie
- eine erfindungsgemäße Vorrichtung.

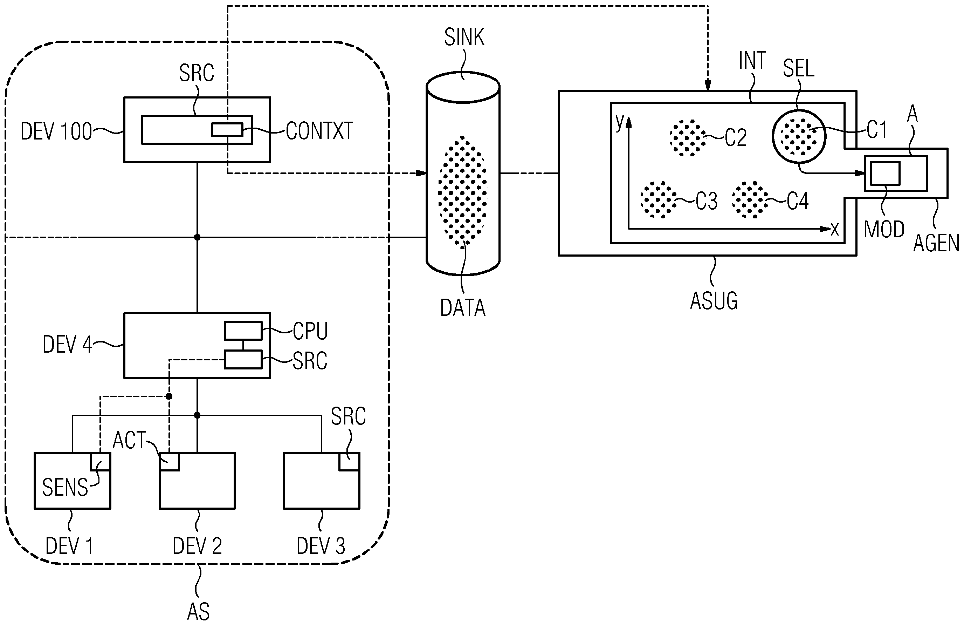

Im Folgenden wird die Erfindung anhand der in der Figur dargestellten Ausführungsbeispiele näher beschrieben und erläutert.

Die FIG zeigt ein Automatisierungssystem, in dem ein Verfahren zum Vorschlagen und/oder Erstellen von Agenten zum Einsatz kommt.

Das Automatisierungssystem AS weist dazu mehrere Automatisierungsgeräte DEV auf. Untergeordnete Automatisierungsgeräte DEV1, DEV2, DEV3 sind jeweils über ein übergeordnetes Automatisierungsgerät DEV4 mit dem Rest des Automatisierungssystems AS verbunden. Das übergeordnete Automatisierungsgerät DEV4 weist eine Prozessoreinheit CPU sowie eine Datenquelle SRC auf. Die Datenquelle SRC ist mit der Prozessoreinheit CPU verbunden, die beispielsweise bereits Berechnungen an Daten DATA in der Datenquelle SRC durchführen kann. Das untergeordnete Automatisierungsgerät DEV3 weist eine eigenständige Datenquelle SRC auf. Diese kann entweder direkt mit einer hier außerhalb des Automatisierungssystems dargestellten Datensenke SINK kommunizieren oder ebenfalls über das übergeordnete Automatisierungsgerät DEV4 und dessen Datenquelle SRC kommunizieren. Die beiden untergeordneten Automatisierungsgeräte DEV1, DEV2 weisen keine eigenen Datenquellen SRC auf. Sie weisen einen Sensor SENS und einen Aktor ACT auf, die über eine gestrichelte Verbindung separat mit der Datenquelle des übergeordneten Automatisierungsgeräts DEV4 verbunden sind. Die gestrichelte Linie soll andeuten, dass es sich bei dem Sensor SENS und dem Aktor ACT um sogenannte intelligente Geräte handeln kann, die direkt mit einem entsprechenden Protokoll mit einer Datenquelle kommunizieren. Es ist aber ebenso denkbar, dass über den herkömmlichen industriellen Protokoll-Kommunikationsweg die notwendigen Daten DATA der Datenquelle SRC bereit gestellt werden. Das Automatisierungsgerät DEV100 ist ein Automatisierungsgerät des höchsten dargestellten Levels, dabei kann es sich beispielsweise um eine übergeordnete Industriesteuerung oder um ein SCADA-System handeln. Auch hier ist eine Datenquelle SRC vorhanden, die in diesem Fall Kontext-Daten CONTXT enthält. Diese Kontext-Daten CONTXT können entweder direkt in die Datensenke SINK geleitet werden, es ist aber ebenso denkbar, dass die Kontext-Daten CONTXT direkt an eine Agenten-Vorschlagskomponente ASUG geleitet werden und dort zur Verfügung stehen. Dies ist jeweils mit einem gestrichelten Pfeil dargestellt.

Neben der Datensenke SINK, die Daten DATA aus dem Automatisierungssystem AS enthält, ist die Agenten-Vorschlagskomponente ASUG zu sehen, die wiederum ein Interface INT zu einer Agenten-Generierungskomponente AGEN aufweist. In der AgentenGenerierungskomponente AGEN ist bereits ein Agent A zu sehen, der anhand eines Modells MOD erstellt wurde. Das Interface hat vier Cluster C1,...,C4 aufbereitet und stellt diese in einer Dimension X und einer Dimension Y dar. Das Modell MOD wurde anhand einer Auswahl SEL, in diesem Fall der gesamte Cluster C1, erstellt. Die Darstellung der Dimensionen X, Y ist hier nur als Beispiel zu sehen. Es sind jegliche grafischen Darstellungen zur manuellen Auswahl denkbar, die es dem Benutzer ermöglichen, Datenstrukturen in den Clustern zu erkennen und eine gemäß der zu definierenden Aufgaben des Agenten A sinnvolle Auswahl SEL zu treffen. Es müssen nicht nur einzelne Cluster ausgewählt werden, sondern es können sich auch mehrere Cluster anbieten, die mit einer Auswahl SEL verschiedene Fälle abdecken und dann in einem einzigen Agenten A abgebildet werden.

Das Interface INT kann die hier als grafisches Interface gezeigten Dimensionen X, Y selbstverständlich auch in einer Art und Weise ohne graphische Aufbereitung anbieten, dass mittels eines Algorithmus des überwachten Lernens in den bereits in Clustern vorliegenden Daten entsprechende Strukturen gefunden werden und diese dann automatisiert zur Agentengenerierung verwendet werden können.

So ist es denkbar, dass die Agenten-Vorschlagskomponente AGEN selbstständig eine Vielzahl an verschiedenen Agenten A, z.B. durch entsprechende Cluster C, vorschlägt und der Experte diejenigen selektiert, die für ihn nützliche Informationen bieten. Diese nützlichen Informationen können durchaus neuartige Zusammenhänge beinhalten, die bisher noch nicht bekannt waren. Der Experte kann dem Agenten A entsprechende Funktionen zuweisen und den Agenten in einer Applikationsbibliothek, z.B. in einer Engineering-Software, zur Verfügung stellen.

Zusammenfassend betrifft die Erfindung ein Verfahren und eine Vorrichtung zum Vorschlagen und/oder Erstellen zumindest eines Agenten A in einem industriellen Automatisierungssystem AS, wobei das industrielle Automatisierungssystem AS aufweist:
- Automatisierungsgeräte DEV, die zumindest teilweise eine Datenquelle SRC aufweisen,
- wobei die Datenquellen SRC Daten DATA der Automatisierungsgeräte DEV sammeln und/oder verarbeiten,
- eine Datensenke SINK, in der Daten DATA, insbesondere Zustandsdaten, der Datenquellen SRC gespeichert werden.

Um ein Verfahren für moderne Automatisierungssysteme anzugeben, das es ermöglicht, die eingangs genannten Agenten einfacher und effizienter vorzuschlagen und/oder zu erstellen wird eine Agenten-Vorschlagskomponente ASUG vorgeschlagen, die Daten DATA der Datensenke SINK mittels einer Clusteranalyse CA zu Clustern C verarbeitet und wobei die Agenten-Vorschlagskomponente ASUG die Cluster C derart an einer Schnittstelle INT zur Verfügung stellt, dass mittels einer Agenten-Generierungskomponente AGEN anhand zumindest einer Auswahl SEL der Cluster C ein Modell MOD für den Agenten A erstellbar ist.

## Patentansprüche

1. Verfahren zum Vorschlagen zumindest eines Agenten (A) in einem industriellen Automatisierungssystem (AS), wobei das industrielle Automatisierungssystem (AS) aufweist:
• Automatisierungsgeräte (DEV), die zumindest teilweise eine Datenquelle (SRC) aufweisen,
• wobei die Datenquellen (SRC) Daten (DATA) der Automatisierungsgeräte (DEV) sammeln und/oder verarbeiten,
• eine Datensenke (SINK), in der Daten (DATA), insbesondere Zustandsdaten, der Datenquellen (SRC) gespeichert werden,
wobei eine Agenten-Vorschlagskomponente (ASUG) die Daten (DATA) der Datensenke (SINK) mittels einer Clusteranalyse (CA) zu Clustern (C) verarbeitet,
wobei die Agenten-Vorschlagskomponente (ASUG) die Cluster (C) unter Einbeziehung von Kontextdaten (CONTXT) erstellt, wobei die Kontextdaten die für die Auswertung verwertbaren Informationen über den Kontext der Daten aus den Datenquellen enthalten, und
wobei die Agenten-Vorschlagskomponente (ASUG) die erstellten Cluster (C) derart an einer Schnittstelle (INT) zur Verfügung stellt, dass mittels einer Agenten-Generierungskomponente (AGEN) anhand zumindest einer Auswahl (SEL) der Cluster (C) ein Modell (MOD) für den Agenten (A) erstellbar ist, wobei nachfolgend mittels der Agenten-Generierungskomponente (AGEN) anhand zumindest der Auswahl (SEL) der Cluster (C) das Modell (MOD) für den Agenten (A) erstellt wird, und dann die Agenten-Generierungskomponente (AGEN) nach der Erstellung des Agenten (A) diesen im Automatisierungssystem (1) als ausführbare Binary zur Verfügung stellt.

2. Verfahren nach Anspruch 1, wobei die Auswahl (SEL) manuell erstellt wird.

3. Verfahren nach Anspruch 1, wobei die Auswahl (SEL) automatisiert oder zumindest teilautomatisiert erstellt wird.

4. Verfahren nach Anspruch 1, 2 oder 3, wobei das Modell (MOD) für den Agenten (A) mittels eines Algorithmus des überwachten Lernens (SL) erstellt wird.

5. Verfahren nach einem der vorhergehenden Ansprüche, wobei das Modell (MOD) ein mathematisches und/oder ein zustandsbasiertes Modell ist.

6. Verfahren nach einem der vorhergehenden Ansprüche, wobei die Schnittstelle (INT) die Cluster (C) zur manuellen Auswahl aufbereitet.

7. Verfahren nach einem der vorhergehenden Ansprüche, wobei die Agenten-Vorschlagskomponente (ASUG) die Daten (DATA) anhand von Kontextdaten (CONTXT) in Cluster (C) verarbeitet.

8. Verfahren nach einem der vorhergehenden Ansprüche, wobei die Datenquellen (SRC) als ein universeller Kommunikationsstack ausgebildet sind.

9. Verfahren nach einem der vorhergehenden Ansprüche, wobei die Datenquellen (SRC) die Daten (DATA) mit Kontextdaten (CONTXT) versehen.

10. Verfahren nach einem der vorhergehenden Ansprüche, wobei die Datenquellen (SRC) mittels eines industriellen Protokolls, insbesondere mittels eines universellen industriellen Protokolls, kommunizieren.

11. Verfahren nach einem der vorhergehenden Ansprüche, wobei die Datenquellen (SRC) die Daten (DATA) anhand von Kontextdaten (CONTXT) vorselektieren.

12. Verfahren nach einem der vorhergehenden Ansprüche, wobei die Datenquellen (SRC) die Daten (DATA) für einen vorgebbaren Zeitraum archivieren und/oder vorverarbeiten.

13. Verfahren nach einem der vorhergehenden Ansprüche, wobei der Agent (A) unter Einbeziehung von Kontextdaten (CONTXT) erstellt wird.

14. Verfahren nach einem der vorhergehenden Ansprüche, wobei die Agenten-Generierungskomponente (AGEN) nach der Erstellung des Agenten (A) diesen im Automatisierungssystem (1) auch Z als kompatibles mathematisches Modell zur Verfügung stellt.

15. Vorrichtung zum Vorschlagen von Agenten (A) in einem industriellen Automatisierungssystem (AS) gemäß einem Verfahren nach einem der Ansprüche 1 bis 14, wobei das industrielle Automatisierungssystem (AS) aufweist:
• Automatisierungsgeräte (DEV), die zumindest teilweise eine Datenquelle (SRC) aufweisen,
• wobei die Datenquellen (SRC) sammeln und/oder verarbeiten Daten (DATA) der Automatisierungsgeräte (DEV) ausgebildet sind,
• eine Datensenke (SINK), die zum Speichern der Daten (DATA) der Datenquellen (SRC) ausgebildet ist,
wobei die Vorrichtung eine Agenten-Vorschlagskomponente (ASUG) und eine Agenten-Generierungskomponente (AGEN) aufweist, wobei die Agenten-Vorschlagskomponente (ASUG) die zum Verarbeiten der Daten (DATA) aus der Datensenke (SINK) mittels einer Clusteranalyse (CA) zu Clustern (C) und zur Erstellung der Cluster (C) unter Einbeziehung von Kontextdaten (CONTXT) ausgebildet ist, wobei die Kontextdaten die für die Auswertung verwertbaren Informationen über den Kontext der Daten aus den Datenquellen enthalten, und
wobei die Agenten-Vorschlagskomponente (ASUG) eine Schnittstelle (INT) aufweist und die Cluster (C) derart an der Schnittstelle (INT) zur Verfügung stellt, dass mittels der Agenten-Generierungskomponente (AGEN) anhand zumindest einer Auswahl (SEL) der Cluster (C) ein Modell (MOD) für den Agenten (A) erstellbar ist, wobei nachfolgend mittels der Agenten-Generierungskomponente (AGEN) anhand zumindest der Auswahl (SEL) der Cluster (C) das Modell (MOD) für den Agenten (A) erstellt wird, und dann
die Agenten-Generierungskomponente (AGEN) nach der Erstellung des Agenten (A) diesen im Automatisierungssystem (1) als ausführbare Binary zur Verfügung stellt..

16. Automatisierungssystem aufweisend:
• Automatisierungsgeräte (DEV), die zumindest teilweise eine Datenquelle (SRC) aufweisen,
• wobei die Datenquellen (SRC) zum Sammeln und/oder verarbeiten von Daten (DATA) der Automatisierungsgeräte (DEV) ausgebildet sind,
• eine Datensenke (SINK), die zum Speichern der Daten (DATA) der Datenquellen (SRC) ausgebildet ist sowie
• eine Vorrichtung gemäß Anspruch 15.

## Claims

1. Method for suggesting at least one agent (A) in an industrial automation system (AS), wherein the industrial automation system (AS) has:
• automation devices (DEV), which at least partially have a data source (SRC),
• wherein the data sources (SRC) collect and/or process data (DATA) of the automation devices (DEV),
• a data sink (SINK), in which data (DATA), in particular status data, of the data sources (SRC) is saved,
wherein an agent suggestion component (ASUG) processes the data (DATA) of the data sink (SINK) into clusters (C) by means of cluster analysis (CA),
wherein the agent suggestion component (ASUG) creates the clusters (C) while taking into consideration context data (CONTXT), wherein the context data contains the information regarding the context of the data from the data source which can be utilised for the evaluation, and
wherein the agent suggestion component (ASUG) makes the created clusters (C) available at an interface (INT) such that a model (MOD) for the agent (A) can be created by means of an agent generation component (AGEN) on the basis of at least one selection (SEL) of the clusters (C), wherein subsequently the model (MOD) for the agent (A) is created by means of the agent generation component (AGEN) on the basis of at least the selection (SEL) of the clusters (C), and then
the agent generation component (AGEN), after creating the agent (A), makes it available in the automation system (1) as an executable binary file.

2. Method according to claim 1, wherein the selection (SEL) is created manually.

3. Method according to claim 1, wherein the selection (SEL) is created automatically or at least semi-automatically.

4. Method according to claim 1, 2 or 3, wherein the model (MOD) for the agent (A) is created by means of a supervised learning algorithm (SL).

5. Method according to one of the preceding claims, wherein the model (MOD) is a mathematical and/or status-based model.

6. Method according to one of the preceding claims, wherein the interface (INT) prepares the clusters (C) for manual selection.

7. Method according to one of the preceding claims, wherein the agent suggestion component (ASUG) processes the data (DATA) into clusters (C) on the basis of context data (CONTXT).

8. Method according to one of the preceding claims, wherein the data sources (SRC) are embodied as a universal communication stack.

9. Method according to one of the preceding claims, wherein the data sources (SRC) provide the data (DATA) with context data (CONTXT).

10. Method according to one of the preceding claims, wherein the data sources (SRC) communicate by means of an industrial protocol, in particular by means of a universal industrial protocol.

11. Method according to one of the preceding claims, wherein the data sources (SRC) preselect the data (DATA) on the basis of context data (CONTXT).

12. Method according to one of the preceding claims, wherein the data sources (SRC) archive and/or preprocess the data (DATA) for a predefinable time frame.

13. Method according to one of the preceding claims, wherein the agent (A) is created while taking into consideration context data (CONTXT).

14. Method according to one of the preceding claims, wherein the agent generation component (AGEN), after creating the agent (A), also makes it available in the automation system (1) as a compatible mathematical model.

15. Apparatus for suggesting agents (A) in an industrial automation system (AS) according to a method according to one of claims 1 to 14, wherein the industrial automation system (AS) has:
• automation devices (DEV), which at least partially have a data source (SRC),
• wherein the data sources (SRC) are embodied to collect and/or process data (DATA) of the automation devices (DEV),
• a data sink (SINK), which is embodied to save the data (DATA) of the data source (SRC),
wherein the apparatus has an agent suggestion component (ASUG) and an agent generation component (AGEN), wherein the agent suggestion component (ASUG) is embodied to process the data (DATA) from the data sink (SINK) into clusters (C) by means of a cluster analysis (CA) and to create the clusters (C) while taking into consideration context data (CONTXT), wherein the context data contains the information regarding the context of the data from the data source which can be utilised for the evaluation, and
wherein the agent suggestion component (ASUG) has an interface (INT) and makes the clusters (C) available at the interface (INT) such that a model (MOD) for the agent (A) can be created by means of an agent generation component (AGEN) on the basis of at least one selection (SEL) of the clusters (C), wherein subsequently the model (MOD) for the agent (A) is created by means of the agent generation component (AGEN) on the basis of at least the selection (SEL) of the clusters (C), and then the agent generation component (AGEN), after creating the agent (A), makes it available in the automation system (1) as an executable binary file.

16. Automation system having:
• automation devices (DEV), which at least partially have a data source (SRC),
• wherein the data sources (SRC) are embodied to collect and/or process data (DATA) of the automation devices (DEV),
• a data sink (SINK), which is embodied to save the data (DATA) of the data source (SRC), as well as
• an apparatus according to claim 15.

## Revendications

1. Procédé permettant de suggérer au moins un agent (A) dans un système d'automatisation industrielle (AS), dans lequel le système d'automatisation industrielle (AS) comprend :
• des appareils d'automatisation (DEV) présentant au moins partiellement une source de données (SRC),
• dans lequel les sources de données (SRC) collectent et/ou traitent des données (DATA) des appareils d'automatisation (DEV),
• un puits de données (SINK) au sein duquel sont stockées des données (DATA), en particulier des données d'état, des sources de données (SRC),
dans lequel un composant de suggestion d'agent (ASUG) traite les données (DATA) du puits de données (SINK) au moyen d'une analyse de groupe (CA) afin de former des groupes (C),
dans lequel le composant de suggestion d'agent (ASUG) crée les groupes (C) en intégrant des données de contexte (CONTXT), dans lequel les données de contexte contiennent les informations, exploitables pour l'évaluation, sur le contexte des données provenant des sources de données, et
dans lequel le composant de suggestion d'agent (ASUG) rend les groupes (C) créés disponibles au niveau d'une interface (INT) de telle manière qu'un modèle (MOD) destiné à l'agent (A) peut être créé au moyen d'un composant de génération d'agent (AGEN) en se basant sur au moins une sélection (SEL) des groupes (C), dans lequel le modèle (MOD) destiné à l'agent (A) est ensuite créé au moyen du composant de génération d'agent (AGEN) en se basant sur au moins la sélection (SEL) des groupes (C), puis le composant de génération d'agent (AGEN), après la création de l'agent (A), rend celui-ci disponible dans le système d'automatisation (1) sous forme de binaire exécutable.

2. Procédé selon la revendication 1, dans lequel la sélection (SEL) est créée manuellement.

3. Procédé selon la revendication 1, dans lequel la sélection (SEL) est créée de manière automatisée ou au moins partiellement automatisée.

4. Procédé selon la revendication 1, 2 ou 3, dans lequel le modèle (MOD) destiné à l'agent (A) est créé au moyen d'un algorithme d'apprentissage supervisé (SL).

5. Procédé selon l'une quelconque des revendications précédentes, dans lequel le modèle (MOD) est un modèle mathématique et/ou basé sur un état.

6. Procédé selon l'une quelconque des revendications précédentes, dans lequel l'interface (INT) prépare les groupes (C) en vue d'une sélection manuelle.

7. Procédé selon l'une quelconque des revendications précédentes, dans lequel le composant de suggestion d'agent (ASUG) traite les données (DATA) en se basant sur des données de contexte (CONTXT) afin de former des groupes (C).

8. Procédé selon l'une quelconque des revendications précédentes, dans lequel les sources de données (SRC) sont conçues sous la forme d'une pile de communication universelle.

9. Procédé selon l'une quelconque des revendications précédentes, dans lequel les sources de données (SRC) dotent les données (DATA) de données de contexte (CONTXT).

10. Procédé selon l'une quelconque des revendications précédentes, dans lequel les sources de données (SRC) communiquent au moyen d'un protocole industriel, en particulier au moyen d'un protocole industriel universel.

11. Procédé selon l'une quelconque des revendications précédentes, dans lequel les sources de données (SRC) présélectionnent les données (DATA) en se basant sur des données de contexte (CONTXT).

12. Procédé selon l'une quelconque des revendications précédentes, dans lequel les sources de données (SRC) archivent et/ou prétraitent les données (DATA) pendant une période de temps pouvant être spécifiée.

13. Procédé selon l'une quelconque des revendications précédentes, dans lequel l'agent (A) est créé en intégrant des données de contexte (CONTXT).

14. Procédé selon l'une quelconque des revendications précédentes, dans lequel le composant de génération d'agent (AGEN), après la création de l'agent (A), rend celui-ci disponible dans le système d'automatisation (1) également sous forme de modèle mathématique compatible.

15. Dispositif permettant de suggérer des agents (A) dans un système d'automatisation industrielle (AS) selon un procédé selon l'une quelconque des revendications 1 à 14, dans lequel le système d'automatisation industrielle (AS) présente :
• des appareils d'automatisation (DEV) présentant au moins partiellement une source de données (SRC),
• dans lequel les sources de données (SRC) collectent et/ou traitent des données (DATA) des appareils d'automatisation (DEV),
• un puits de données (SINK) conçu afin de stocker les données (DATA) des sources de données (SRC),
dans lequel le dispositif présente un composant de suggestion d'agent (ASUG) et un composant de génération d'agent (AGEN), dans lequel le composant de suggestion d'agent (ASUG) est conçu afin de traiter les données (DATA) provenant du puits de données (SINK) au moyen d'une analyse de groupe (CA) afin de former des groupes (C) et afin de créer les groupes (C) en intégrant des données de contexte (CONTXT), dans lequel les données de contexte contiennent les informations, exploitables pour l'évaluation, sur le contexte des données provenant des sources de données, et
dans lequel le composant de suggestion d'agent (ASUG) présente une interface (INT) et rend les groupes (C) disponibles au niveau de l'interface (INT) de telle manière qu'un modèle (MOD) destiné à l'agent (A) peut être créé au moyen du composant de génération d'agent (AGEN) en se basant sur au moins une sélection (SEL) des groupes (C), dans lequel le modèle (MOD) destiné à l'agent (A) est ensuite créé au moyen du composant de génération d'agent (AGEN) en se basant sur au moins la sélection (SEL) des groupes (C), puis le composant de génération d'agent (AGEN), après la création de l'agent (A), rend celui-ci disponible dans le système d'automatisation (1) sous forme de binaire exécutable.

16. Système d'automatisation présentant :
• des appareils d'automatisation (DEV) présentant au moins partiellement une source de données (SRC),
• dans lequel les sources de données (SRC) sont conçues afin de collecter et/ou de traiter des données (DATA) des appareils d'automatisation (DEV),
• un puits de données (SINK) conçu afin de stocker les données (DATA) des sources de données (SRC), et
• un dispositif selon la revendication 15.
